# EUROPÄISCHE PATENTANMELDUNG

(11) **EP 3 190 383 A1**
(43) Veröffentlichungstag der Anmeldung: **12.07.2017**
(21) Anmeldenummer: 16198924.9
(22) Anmeldetag: 15.11.2016
(51) Int. Cl.: G01B 11/02, G01B 11/04, B65B 41/18, B65B 57/02

(54) **SENSORANORDNUNG, VERPACKUNGSMASCHINE, VERFAHREN ZUM ERFASSEN EINER FARBDRUCKMARKE UND VERFAHREN ZUM BEARBEITEN EINER MATERIALBAHN**

(30) Priorität: 08.01.2016 DE 102016200146
(71) Anmelder: ROBERT BOSCH GMBH, 70442 Stuttgart (DE)
(72) Erfinder: Zorla, Jens Jakob, 8245 Feuerthalen (CH); Schroeder, Manfred, 71332 Waiblingen (DE)

(57) **Zusammenfassung**

Die vorliegende Erfindung betrifft eine Sensoranordnung (10) zur optischen Erfassung einer Position (115) einer Farbdruckmarke (110) auf einer Materialbahn (100), insbesondere bei einer Verpackungsmaschine (1) mit einem optischen Farbsensor (11) zur Groberfassung der Position (115) der Farbdruckmarke (110) auf der Materialbahn (100), einem optischen Kontrastsensor (12) zur Detailerfassung der Position (111) Farbdruckmarke (110) und einer Steuereinheit (20), welche eingerichtet ist, den Kontrastsensor (12) zur Detailerfassung der Position (115) der Farbdruckmarke (110) auf der Grundlage der Groberfassung der Position (115) der Farbdruckmarke (110) auf der Materialbahn (100) zu steuern.

## Beschreibung

### Stand der Technik

Die vorliegende Erfindung betrifft eine Sensoranordnung, eine Verpackungsmaschine, ein Verfahren zum Erfassung einer Farbdruckmarke und ein Verfahren zum Bearbeiten einer Materialbahn. Die vorliegende Erfindung betrifft insbesondere eine Sensoranordnung zur optischen Erfassung einer Position einer Farbdruckmarke auf einer Materialbahn, insbesondere bei einer Verpackungsmaschine, eine Verpackungsmaschine zur Bearbeitung einer Materialbahn, ein Verfahren zum Erfassen einer Position einer Farbdruckmarke auf einer Materialbahn, insbesondere bei einer Verpackungsmaschine, sowie ein Verfahren zum Bearbeiten einer Materialbahn, insbesondere unter Verwendung der Verpackungsmaschine.

Beim Verarbeiten von Materialbahnen ist bekannt, den Transport- und/oder Verarbeitungsprozess in Bezug auf die Materialbahn, zum Beispiel einer Folie oder dergleichen, und insbesondere die Positionierung der Materialbahn durch das Verwenden so genannter Druckmarken auf der Oberfläche der Materialbahn zu steuern. Eine derartige Druckmarkensteuerung ist dazu ausgebildet, die Position einer Materialbahn z.B. am Ende eines Abschnittes oder Abzuges zu erfassen und ggf. eine Korrektur der Lage der Bahn durchzuführen. Die Korrektur soll z.B. einen Schlupf zwischen der Materialbahn und den Transportmitteln, zum Beispiel Abzugsbändern oder dergleichen, sowie die Differenz zwischen eingestellter Abzugslänge und einer aktuellen Druckbildlänge der Materialbahn kompensieren.

Bei diesem Vorgehen werden oft ein Kontrastsensor und Schwarz-Weiß-Druckmarken eingesetzt. Die Druckmarke befindet sich entweder in einem eigentlich nicht bedruckten Bereich der Materialbahn, um automatisiert werden zu können, oder setzt im Falle des Vorliegens einer Druckmarke in einer ganzflächig bedruckten Folie das manuelle Definieren eines Positionsfensters für die Aktivierung des Kontrastsensors voraus.

Problematisch ist dabei, dass jegliche Störung im Abzug der Materialbahn ein neues Einrichten der verwendeten Positionsfenster erfordert. Die Stabilität des Gesamtvorganges ist von einer Vielzahl von Faktoren abhängig, die darüber hinaus oft in nicht vorhersehbarer Weise miteinander korreliert sind.

### Offenbarung der Erfindung

Die erfindungsgemäße Sensoranordnung mit den Merkmalen des Anspruchs 1 weist demgegenüber den Vorteil auf, dass ein automatisches, eindeutiges und prozessstabiles Erkennen einer Druckmarke unabhängig von einer Farbgebung oder Bedruckung der Materialbahn möglich ist. Dies wird erfindungsgemäß mit den Merkmalen des Anspruchs 1 dadurch erreicht, dass eine Sensoranordnung zur optischen Erfassung einer Position einer Farbdruckmarke auf einer Materialbahn vorgeschlagen wird, insbesondere bei einer Verpackungsmaschine, mit einem optischen Farbsensor zur Erfassung der Position der Farbdruckmarke auf der Materialbahn, einem optischen Kontrastsensor zur Detailerfassung der Position Farbdruckmarke und einer Steuereinheit, welche eingerichtet ist, den Kontrastsensor zur Detailerfassung der Position der Farbdruckmarke auf der Grundlage der Groberfassung der Position der Farbdruckmarke auf der Materialbahn zu steuern. Die erfindungsgemäße Sensoranordnung schafft eine gesteigerte Genauigkeit bei der optischen Erfassung der Position einer Farbdruckmarke dadurch, dass zunächst mittels des optischen Farbsensors eine Groberfassung der Position erfolgt und diese dann mittels der Steuereinheit genutzt wird, um die Detailerfassung der Position der Farbdruckmarke auf der Grundlage der Groberfassung der Position der Farbdruckmarke zu steuern. Das bedeutet, dass durch den optischen Farbsensor zunächst das Vorhandensein und die grobe Position einer auf der Materialbahn vorhandenen Farbdruckmarke ermittelt wird. Erst dann kommt der Kontrastsensor zum Einsatz, um die genaue Position der Farbdruckmarke auf der Materialbahn zu ermitteln. Durch die Abfolge dieser Vorgänge erhöht sich die Flexibilität des Einsatzes der Sensoranordnung, weil Abweichungen im Auftreten der Farbdruckmarke in ihrer Position, Umgebung oder eigenen Gestalt im Verhältnis zur Umgebung berücksichtigt und kompensiert werden können.

Die Unteransprüche zeigen bevorzugte Weiterbildungen der Erfindung.

Es ist von besonderem Vorteil, wenn im Verhältnis zu einer gegebenen Transportgeschwindigkeit der Materialbahn in einer Transportrichtung der optische Farbsensor und der optische Kontrastsensor in der Transportrichtung der Materialbahn von einander räumlich in einem Abstand angeordnet sind, welcher einer Transportzeit der Materialbahn entspricht, die innerhalb eine vorbestimmten Werteintervalls liegt und insbesondere 10 ms nicht unterschreitet. Durch die Beabstandung zwischen optischem Farbsensor und optischem Kontrastsensor mit dem optischen Farbsensor in Bezug auf die in der Transportrichtung des Materialbandes vorgeschalteten Position ergibt sich die Möglichkeit einer Echtzeitbewertung der Daten des optischen Farbsensors, zum Beispiel durch die Steuereinheit, um unmittelbar auf die Situation der Materialbahn an der Position des Farbsensors mit der Steuerung des optischen Kontrastsensors reagieren zu können.

Gemäß einer anderen Ausführungsform der erfindungsgemäßen Sensoranordnung ist es vorgesehen, dass die Steuereinheit eingerichtet ist, vom optischen Farbsensor und/oder vom optischen Kontrastsensor ausgegebene Signale zu erfassen, zu speichern und/oder zu bewerten. Das Erfassen, Speichern und Bewerten der vom optischen Farbsensor und/oder vom optischen Kontrastsensor aufgenommenen Daten ermöglicht eine besonders flexible Steuerung des Transportes und/oder der Verarbeitung der zu Grunde liegenden Materialbahn.

Um eine Verwechslung mit dem Druckbild der zu Grunde liegenden Materialbahn zu vermeiden, ist es vorgesehen, dass die Steuereinheit eingerichtet ist, aus erfassten Signalen vom optischen Farbsensor ein Vorliegen und/oder die Position einer vordefinierten mehrfarbigen Farbdruckmarke auf der Materialbahn und insbesondere Positionen von vordefinierten Farbwechseln innerhalb einer vorliegenden Farbdruckmarke in der Transportrichtung der Materialbahn zu bestimmen.

Zur Steigerung der Verarbeitungsgeschwindigkeit und zur Reduktion des Datenaufkommens im Zusammenhang mit der Steuereinheit ist es vorgesehen, dass die Steuereinheit eingerichtet ist, (i) aus erfassten Signalen vom optischen Farbsensor ein räumliches und/oder zeitliches Positionsfenster in Bezug auf ein Vorliegen einer vordefinierten mehrfarbigen Farbdruckmarke auf der Materialbahn zu bestimmen und insbesondere (ii) den optischen Kontrastsensor auf der Grundlage des Positionsfensters zur Kontrasterfassung zu aktivieren und zu deaktivieren.

Die Flexibilität des Einsatzes der erfindungsgemäßen Sensoranordnung kann weiter gesteigert werden, indem in der Steuereinheit für mindestens eine vordefinierte mehrfarbige Farbdruckmarke repräsentative Information niedergelegt ist, insbesondere für eine mehrfarbige Farbdruckmarke, die in einer Transportrichtung der Materialbahn eine vordefinierte Abfolge dreier Farben aufweist, die paarweise verschieden sind und/oder eine Farbe gelb, eine Farbe blau und eine Farbe rot umfassen.

Besonders einfache Verhältnisse bei der Bewertung des Druckbildes der zu Grunde liegenden Materialbahn und der dort ggf. vorgesehenen Farbdruckmarke ergeben sich, wenn die Steuereinheit ausgebildet ist, aus vom optischen Farbsensor ausgegebenen erfassten Signalen die räumlichen und/oder zeitlichen Positionen des Beginns und des Endes der drei Farben der Abfolge der Farben der vordefinierten mehrfarbige Farbdruckmarke (i) zu bestimmen, (ii) - insbesondere unmittelbar nach dem Vorliegen des Beginns einer dritten Farbe - mit der niedergelegten repräsentativen Information zu vergleichen und (iii) bei Übereinstimmung mit dieser ein Positionsfenster für den optischen Kontrastsensor zu bestimmen.

Ferner betrifft die vorliegende Erfindung eine Vorrichtung zur Bearbeitung einer Materialbahn, insbesondere eine Verpackungsmaschine. Diese weist eine erfindungsgemäße Sensoranordnung sowie mindestens eine Bearbeitungseinrichtung auf, welche zur Bearbeitung der Materialbahn auf der Grundlage einer Position einer Farbdruckmarke auf der Materialbahn aus der Sensoranordnung ausgebildet ist.

Gemäß einem anderen Aspekt der vorliegenden Erfindung wird ein Verfahren geschaffen zum Erfassen einer Position einer Farbdruckmarke auf einer

Materialbahn, insbesondere bei einer Verpackungsmaschine und/oder unter Verwendung einer erfindungsgemäßen Sensoranordnung. Dabei sind folgende Schritte vorgesehen:
(A) Groberfassung der Position der Farbdruckmarke auf der Materialbahn auf der Grundlage der optischen Erfassung von Farbcharakteristika der Farbdruckmarke auf der Materialbahn.
(B) Detailerfassung der Position der Farbdruckmarke auf der Materialbahn auf der Grundlage der optischen Erfassung von Kontrastcharakteristika der Farbdruckmarke auf der Materialbahn.

Die Detailerfassung (B) der Position der Farbdruckmarke auf der Materialbahn wird dabei auf der Grundlage der Groberfassung (A) der Position der Farbdruckmarke auf der Materialbahn gesteuert.

Um von der Farbgebung des Druckbildes der zu Grunde liegenden Materialbahn möglichst unabhängig zu sein, ist es vorgesehen, dass - insbesondere für die Groberfassung (A) - Farbcharakteristika der Farbdruckmarke auf der Materialbahn erfasst werden und daraus ein Vorliegen und/oder die Position eines Vorliegens einer vordefinierten mehrfarbigen Farbdruckmarke auf der Materialbahn und insbesondere Positionen von vordefinierten Farbwechseln innerhalb einer vorliegenden Farbdruckmarke in einer Transportrichtung der Materialbahn bestimmt werden.

Bei einer anderen Ausführungsform des erfindungsgemäßen Verfahrens ist es in analoger Weise wie bei der Sensoranordnung selbst vorgesehen, dass auf der Grundlage von Daten aus der Groberfassung (A) der Position der Farbdruckmarke auf der Materialbahn ein räumliches und/oder zeitliches Positionsfenster für die Detailerfassung (B) der Position der Farbdruckmarke auf der Materialbahn bestimmt und der Detailerfassung (B) zu Grunde gelegt wird. Durch diese Maßnahmen wird der Aufwand an anfallenden optischen Daten reduziert und somit die Verarbeitungsgeschwindigkeit gesteigert.

Zur Erzielung eines besonders ökonomischen Einsatzes der Vorgänge im Zusammenhang mit der Kontrasterfassung ist es bei einer anderen Ausführungsform des erfindungsgemäßen Verfahrens vorgesehen, dass (i) aus erfassten Farbcharakteristika der Farbdruckmarke auf der Materialbahn, insbesondere aus der Groberfassung (A), ein räumliches und/oder zeitliches Positionsfenster in Bezug auf ein Vorliegen einer vordefinierten mehrfarbigen Farbdruckmarke auf der Materialbahn bestimmt wird und insbesondere (ii) das optische Erfassen von Kontrastcharakteristika der Farbdruckmarke auf der Materialbahn bei der Detailerfassung (B) auf der Grundlage des Positionsfensters zur Kontrasterfassung aktiviert und deaktiviert wird.

Das erfindungsgemäße Verfahren kann besonders flexibel gestaltet werden, wenn gemäß einer weiteren bevorzugten Ausführungsform des erfindungsgemäßen Verfahrens welchem für mindestens eine vordefinierte mehrfarbige Farbdruckmarke repräsentative Information zu Grunde gelegt wird, insbesondere für eine mehrfarbige Farbdruckmarke, die in einer Transportrichtung der Materialbahn eine vordefinierte Abfolge dreier Farben aufweist, die paarweise verschieden sind und/oder eine Farbe gelb, eine Farbe blau und eine Farbe rot umfassen. Dabei können auch mehrere mehrfarbige Farbdruckmarken mit ihren repräsentativen Daten zugrunde gelegt werden, sodass in schnellem Wechsel die Verarbeitung unterschiedlicher Druckbilder oder Materialbahnabschnitte möglich ist.

Der prozesstechnische Aufwand kann weiter reduziert werden, wenn gemäß einer anderen Ausführungsform des erfindungsgemäßen Verfahrens aus optisch erfassten Farbcharakteristika die räumlichen und/oder zeitlichen Positionen des Beginns und des Endes der drei Farben der Abfolge der Farben der vordefinierten mehrfarbige Farbdruckmarke (i) bestimmt werden, (ii) - insbesondere unmittelbar nach dem Bestimmen des Vorliegens des Beginns einer dritten Farbe - mit der niedergelegten repräsentativen Information verglichen wird und (iii) bei Übereinstimmung mit diesen ein Positionsfenster für das optischen Erfassen von Kontrastcharakteristika bestimmt wird.

In vorteilhafter Weise kann das erfindungsgemäße Verfahren zum Erfassen einer Position einer Farbdruckmarke auf einer Materialbahn insbesondere bei einem Verfahren zum Bearbeiten einer Materialbahn und ferner insbesondere unter Verwendung der erfindungsgemäßen Verpackungsmaschine eingesetzt werden. Dieses ist ausgebildet mit einem Schritt des Bearbeitens der Materialbahn, insbesondere des Transportierens und/oder des Ablängens der Materialbahn. der Schritt des Bearbeitens der Materialbahn wird gesteuert auf der Grundlage einer Position einer oder mehrerer Farbdruckmarken auf der Materialbahn. Die Position der einen oder der mehreren Farbdruckmarken auf der Materialbahn wird bestimmt mit dem erfindungsgemäßen Verfahren und insbesondere unter Verwendung einer erfindungsgemäßen Sensoranordnung.

### Kurzbeschreibung der Figuren

Unter Bezugnahme auf die beigefügten Figuren werden Ausführungsformen der Erfindung im Detail beschrieben.
- Figur 1: ist eine schematische Draufsicht auf eine erfindungsgemäße Verpackungsmaschine und einer Ausführungsform der erfindungsgemäßen Sensoranordnung;
- Figur 2: zeigt eine erfindungsgemäß verwendete mehrfarbige Farbdruckmarke;
- Figur 3: zeigt nach Art eines Blockdiagramms Aspekte einer Ausführungsform des erfindungsgemäßen Verfahrens zum Erfassen einer Position einer Farbdruckmarke auf einer Materialbahn;
- Figur 4: zeigt nach Art eines Diagrammes die zeitliche Abfolge verschiedener Ereignisse beim Detektieren von Farben und Farbwechseln bei einer erfindungsgemäß verwendeten mehrfarbigen Farbdruckmarke im Zusammenhang mit den optischen Sensoren der erfindungsgemäßen Sensoranordnung;
- Figur 5: zeigt in schematischer Form die Anordnung herkömmlicher Druckmarken auf einer herkömmlichen Materialbahn.

### Bevorzugte Ausführungsformen der Erfindung

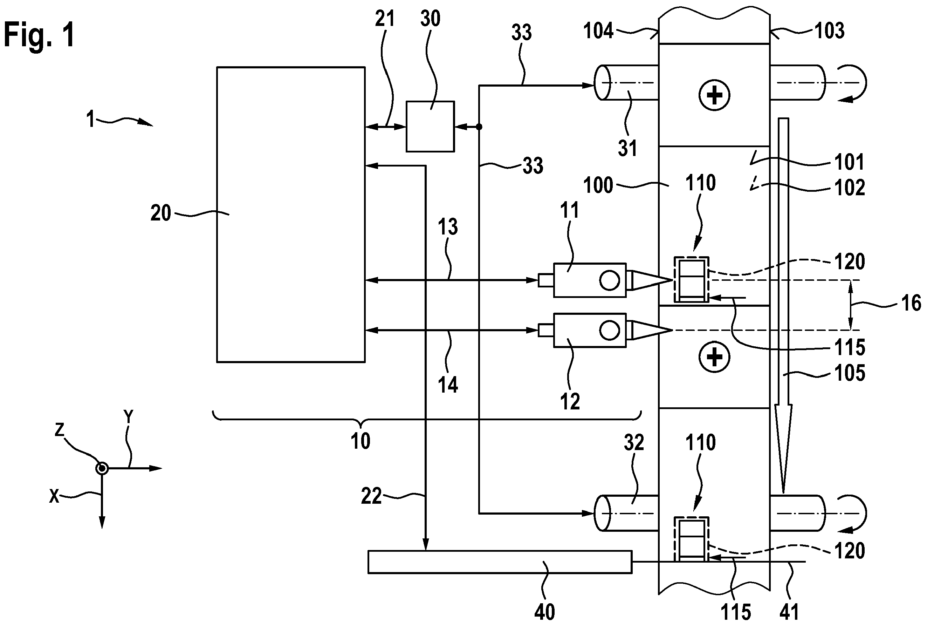

Nachfolgend werden unter Bezugnahme auf die Figuren 1 bis 4 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Figur 1 zeigt in schematischer Draufsicht und nach Art eines Blockdiagramms eine erste Ausführungsform der erfindungsgemäßen Verpackungsmaschine 1 unter Verwendung einer Ausführungsform der erfindungsgemäßen Sensoranordnung 10.

Grundsätzlich kann es sich bei der in Figur 1 dargestellten Vorrichtung auch um eine ganz allgemeine Vorrichtung zum Bearbeiten einer Materialbahn 100 handeln.

Diese Materialbahn 100 ist zum Beispiel nach Art einer Folie auf einer Rolle aufgewickelt und bildet so zunächst ein Endlosband. Dieses wird mit einem entsprechenden Druckbild bedruckt und dann mittels einer Ablängeinrichtung 40 mit einem Ablängmittel 41 in Abzüge unterteilt. Zur Förderung der Materialbahn 100 ist eine Transporteinheit 30 vorgesehen, die mit Transportmitteln 31 und 32, zum Beispiel in Form eines Walzenpaares, ausgebildet ist. Die Ablängeinrichtung 40 und die Transporteinrichtung 30 werden über eine Steuereinheit 20 in Verbindung mit Steuerleitungen 21 und 22 gesteuert. Die Transportmittel 31 und 32 sind über eine Steuerleitung 33 mit der Transporteinheit 30 verbunden.

Die Längsrichtung des Materialbandes 100 erstreckt sich in der Richtung x. Diese entspricht auch der Transportrichtung 105 über die Orientierung und Rotation der z.B. als Walzen ausgebildeten Transportmittel 31 und 32.

Kern der Verpackungsmaschine 1 und insbesondere der dort vorgesehenen Ausführungsform der erfindungsgemäßen Sensoranordnung 10 ist das Vorsehen eines optischen Farbsensors 11 an einer in Bezug auf die Transportrichtung 105 vorgeschalteten oder stromaufwärts gelegenen Position und eines optischen Kontrastsensors 12 an einer gegenüber dem optischen Farbsensor 11 nachgeschalteten oder stromabwärtsgelegenen Position in Transportrichtung 105 der Materialbahn 100. Der optische Farbsensor 11 ist über eine erste Mess- und Steuerleitung 13 mit der Steuereinheit 20 verbunden. Der optische Kontrastsensor 12 ist über zweite eine Mess- und Steuerleitung 14 mit der Steuereinheit 20 verbunden.

Die Materialbahn 100 besitzt eine bedruckte Oberseite 101 und eine Rückseite 102, die auch bedruckt sein kann. Lateral und in y-Richtung ist die Materialbahn 100 durch die seitliche Kanten 103 und 104 begrenzt. In bestimmten und ggf. regelmäßigen Abständen in der Transportrichtung 105 ist auf der Oberseite 101 der Materialbahn 100 eine Druckmarke aufgedruckt. Diese ist erfindungsgemäß eine mehrfarbige Farbdruckmarke 110.

Grundsätzlich kann die Farbdruckmarke 110 an einer beliebigen Stelle auf der Oberseite 101 der Materialbahn 100 angeordnet sein, um den Abschnitt der Materialbahn 100 zu definieren, der genau einen Abzug ergibt.

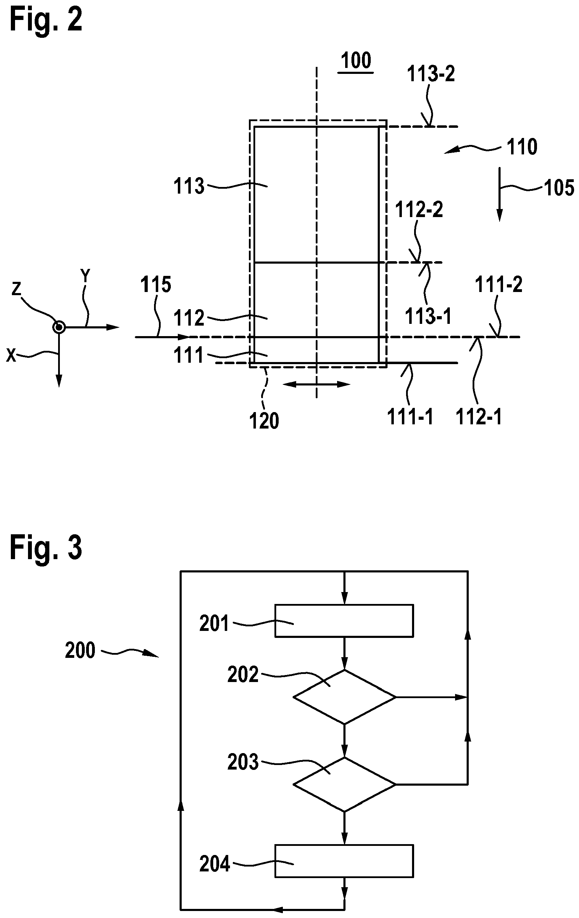

Die farblichen und geometrischen Details der erfindungsgemäß verwendeten Farbdruckmarke 110 werden nachfolgend im Zusammenhang mit Figur 2 im Detail erläutert.

Grundsätzlich erfasst zunächst der optische Farbsensor 11 mit optischen Mitteln beim Transport der Materialbahn 100 entlang der Transportrichtung 105 insbesondere in Transportrichtung 105 die farbliche Abfolge auf der Oberseite 101 der Materialbahn 100 im Druckbild. Die entsprechend aufgenommenen Signale werden über die Mess- und Steuerleitung 13 an die Steuereinheit 20 übermittelt und dort bewertet. In der Steuereinheit 20 sind vorzugsweise Daten hinterlegt, die für den geometrischen und farblichen Aufbau und insbesondere für die Farbabfolge der Farbdruckmarke 110 repräsentieren. Aus dem Vergleich der zeitlichen Abfolge der vor dem optischen Farbsensor 100 entlang laufenden Farbbereiche auf der Oberseite 101 der Materialbahn 100 kann auf das Vorhandensein und die grobe Position der mehrfarbigen Farbdruckmarke 110 geschlossen werden.

Dabei dient die erste Kante 112-1 der zweiten Farbe innerhalb eines vordefinierten Farbwechselverlaufs als Grundlage zur Definition der Position 115 der Farbdruckmarke 110.

Auf der Grundlage des erfassten zeitlichen Farbverlaufs und insbesondere der Position 115 der Farbdruckmarke 110 bei der Groberfassung (A) bestimmt die Steuereinheit 20 ein so genanntes Positionsfenster 120. Dieses Positionsfenster 120 gibt die räumlichen und zeitlichen Details an, die für die Aktivierung des in Transportrichtung 105 nachgeschalteten optischen Kontrastsensors 12 notwendig sind.

Um innerhalb der Steuereinheit 20 eine Bewertung der Signale des optischen Farbsensors 11 möglich zu machen, ist in Abhängigkeit von der Transportgeschwindigkeit der Materialbahn 100 entlang der Transportrichtung 105 eine entsprechende Beabstandung 16 des optischen Kontrastsensors 12 vom optischen Farbsensor 11 in der Transportrichtung 105 notwendig. Dadurch wird bewirkt, dass z.B. zwischen der Erfassung der ersten Kante von rot durch den Farbsensor 11 mit der Freigabe der Bestimmung des Positionsfensters 120 und der Erfassung der ersten Kante blau durch den Kontrastsensor 12 mindestens eine Zykluszeit in Bezug auf den Steuereinheit 20 verstreicht.

In der Figur 1 erstreckt sich die Materialbahn 100 in ihrer Erstreckungsrichtung in der Richtung x. Die Richtung y ist identisch mit der Querrichtung der Materialbahn 100 zwischen den beiden seitlichen Kanten 104 und 103.

Figur 2 zeigt in schematischer Draufsicht eine erfindungsgemäß verwendete Farbdruckmarke 110, die auf der Oberseite 101 einer Materialbahn 100 aufgedruckt ist und auch im Druckbild der Materialbahn 100 integriert sein kann.

Bei der hier gezeigten Ausführungsform gemäß Figur 2 besteht die Farbdruckmarke 110 aus drei in der Transportrichtung 105 aufeinander folgenden ersten, zweiten und dritten Farbbereichen 111, 112 bzw. 113, hier in den Farben gelb, blau, rot. Es können auch andere Farben oder auch andere Reihenfolgen zu Grunde gelegt werden. In zeitlicher Abfolge und gemäß der Transportrichtung 105 erscheint vor dem optischen Farbsensor 11, zum Beispiel gemäß Figur 1, zunächst der erste oder gelbe Farbbereich 111 mit seiner ersten Kante 111-1 und seiner zweiten Kante 111-2, die auch als Startkante bzw. als Endkante des ersten Farbbereichs 111 bezeichnet werden. An die zweite Kante 111-2 schließt sich unmittelbar die erste Kante 112-1 des zweiten Farbbereichs 112 - hier in blau - an. Nach der zweiten Kante 112-2 des zweiten Farbbereiches 112 folgt der dritte Farbbereich 113 mit seiner ersten Kante 113-1 und seiner zweiten Kante 113-2. Beim dritten Farbbereich kann es sich um die Farbe rot handeln.

Sämtliche Kanten 111-1, 111-2, 112-1, 112-2, 113-1 und 113-2 sind parallel zueinander und verlaufen in der Querrichtung der Materialbahn 100 und somit in der Richtung y und senkrecht zur Transportrichtung 105, die sich in x-Richtung erstreckt.

Das Auslaufen des dritten Farbbereichs 113 in rot und somit das Durchlaufen der zweiten Kante 113-2 als Endkante des dritten Farbbereichs 113 dient der eigentlichen Definition der Position 115 der Farbdruckmarke 110 und damit des Positionsfensters 120 für die Aktivierung und Deaktivierung des nachfolgend geschalteten optischen Kontrastsensors 112 gemäß Figur 1. Es sind aber auch andere Definitionen der Position 115 denkbar.

Die Position des Beginns des zweiten Farbbereiches 112 in blau, also die Lage der Kante 112-1, definiert das Positionsfensters 120. Die Position des Beginns des dritten Farbbereiches 113 in rot, also die Lage der Kante 113-1, initiiert die Auswertung in Bezug auf das Positionsfenster 120. Die Transportzeit der Ruhezone, die durch den dritten Farbbereich 113 in rot definiert wird muss dabei größer sein als die Zykluszeit der zu Grunde liegenden Steuereinheit 20, z.B. eines dabei eingesetzten Prozessors.

Der erste Farbbereich 111, z.B. in gelb, wird auch als Vorhof bezeichnet und dient zur späteren Erkennung, ob es sich insgesamt um die zu erkennende Druckmarke 110 handelt. Dies kann insbesondere erfolgen im Zusammenhang mit einem gewählten Farbkontrast zu einem nachgelagerten Farbbereich.

Der zweite Farbbereich 112, z.B. in blau, dient der eigentlichen Bestimmung der Position.

Der dritte Farbbereich 113, z.B. in rot, darf keine Flanke enthalten, die detektiert werden könnte, und definiert auf diese Weise die Farbdruckmarke 110 als solche.

Erst nach Abfolge der ersten bis dritten Farbbereiche 111 bis 113 mit dem konkreten zeitlichen Verlauf, der durch die Länge der Farbbereiche 111 bis 113 in der Transportrichtung 105 definiert ist, und vor allem mit dem Auslaufen des dritten Farbbereichs 113 und seiner zweiten Kante 113-2 erfolgt die Grobdefinition der Position 115 für die Farbdruckmarke 110. Es schließen sich die Definition des Positionsfensters 120 und somit die Scharfschaltung und Aktivierung bzw. Deaktivierung des optischen Kontrastsensors 12 zur Detailerfassung der Position 115 der Farbdruckmarke 112 auf der Materialbahn 100 an.

Figur 3 zeigt nach Art eines schematischen Flussdiagramms Aspekte eines erfindungsgemäßen Verfahrens 200 zur Erfassung der Position einer Farbdruckmarke 110 auf einer Materialbahn 100.

In einem ersten Prozess 201 werden mittels des Farbsensors 11 kontinuierlich die vor dem Sensor 11 laufenden Farbbereiche 111, 112, 113 erfasst. Dabei werden kontinuierlich die letzten aktuellen Startpositionen 111-1, 112-1, 113-1 und Endpositionen 111-2, 112-2, 113-2 sämtlicher drei Farbbereiche 111 bis 113 ermittelt und somit eine potenzielle Position 115 einer erfindungsgemäß verwendeten Farbdruckmarke 110 bestimmt.

In einem zweiten Prozess 202 wird geprüft, ob der Start mit der ersten Kante 113-1 des dritten Farbbereichs 113 vorliegt. Es wird also geprüft, ob die erste Kante 113-1 des dritten Farbbereichs 113 vor dem optischen Farbsensor 11 vorbeiläuft. Ist dies nicht der Fall, wird zur kontinuierlichen Überwachung der drei Farbbereiche 111 bis 113 und dem Prozess 201 zurückgekehrt.

Liegt die erste Kante 113-1 eines dritten Farbbereichs 113 vor, so wird zu einem dritten Prozess 203 übergegangen, bei welchem geprüft wird, ob die erfasste Farbabfolge mit den Farbwechseln mit den zwei Farbbereichen 111 und 112 und der ersten Kante 113-1 des dritten Farbbereiches 113 mit der Farbfolge einer Vorlage für die Farbdruckmarke 110 übereinstimmt. Ist dies nicht der Fall, so wird zum ersten Prozess 201 übergegangen.

Ist jedoch die gemessene Farbabfolge in Übereinstimmung mit der Vorlage, so wird vom dritten Prozess 203 zu einem vierten Prozess 204 übergegangen, bei welchem das Positionsfenster 120 für den nachfolgend geschalteten optischen Kontrastsensor 12 definiert oder aktualisiert wird.

Es können sich dann weitere Verarbeitungsschritte im Hinblick auf den Kontrastsensor 12 und eine Verarbeitungseinrichtung anschließen. Grundsätzlich geht dann der Vorgang des Verfahrens 200 zum ersten Prozess 201 und der allgemeinen Überwachung des Farbverlaufs des Druckbildes der Materialbahn 100 über.

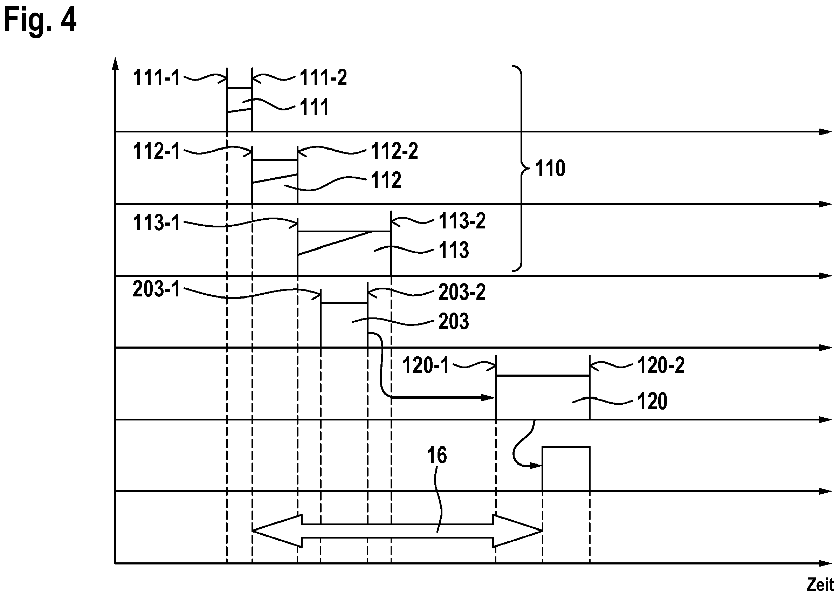

Figur 4 zeigt nach Art eines Diagramms die zeitliche Abfolge des Vorbeilaufens der einzelnen Farbbereiche 111 bis 113 vor dem optischen Farbsensor 11 bzw. vor dem optischen Kontrastsensor 12 im Zusammenhang mit den verschiedenen Prozessen der Auswertung und der Bestimmung des Positionsfensters 120 für die Aktivierung und Deaktivierung des optischen Kontrastsensors 12.

Der erste Farbbereich 111 mit seinen ersten und zweiten Kanten 111-1 und 111-2, hier wieder als gelber Farbbereich dargestellt, dient als so genannter Vorhof und als erstes Kernelement der zu überprüfenden farblichen Abfolge.

Es schließt sich daran räumlich in Transportrichtung 105 und zeitlich nachfolgend der zweite Farbbereich 112 mit seiner ersten Kante 112-1 und seiner zweiten Kante 112-2 an.

Mit diesem Farbwechsel erfolgt dann der Übergang zum eigentlichen Vorgang oder Prozess 202 der Überprüfung, ob auch der dritte Farbbereich 113 mit seiner ersten Kante 113-1 und seiner zweiten Kante 113-2 folgt, um dann zum Prozess 203 in der vierten Spur von oben nach dem Durchlaufen der ersten Kante 113-1 zu einem leicht verzögerten Zeitpunkt 203-1 überzugehen und zum Zeitpunkt 203-2 abzuschließen. Der Prozess 202 initiiert mit dem Ereignis des Auftretens der ersten Kante 113-1 des dritten Farbbereiches 113 in rot den Prozess 203 in der Steuereinheit, wobei die Auswertung asynchron über einen neuen Zyklus erfolgt. Der als Ruhezone fungierende dritte Farbbereich 113 in rot steht mit der Zeitspanne mindestens eines Zyklus im Zusammenhang.

Erfolgt die Bestätigung des Durchlaufs einer Farbabfolge, die der in der Steuereinheit 20 zu Grunde gelegten Vorlage entspricht, so wird gemäß der dritten Spur von unten im Diagramm der Figur 4 das Positionsfenster 120 für den optischen Kontrastsensor 12 definiert mit einer Anfangszeit oder -position 120-1 und einer Endzeit oder -position 120-2, in deren Verlauf dann auch gemäß der zweiten Spur von unten des Diagramms aus Figur 4 die Farbdruckmarke 110 vor dem Kontrastsensor 12 erscheint.

Mit der Definition des Positionsfensters 120 startet die Auswertung in Bezug auf den Kontrastsensor 12.

Der Doppelpfeil in der untersten Spur des Diagramms von Figur 4 zeigt einen bei einer Ausführungsform der Erfindung definierbaren Abstand 16 als Mindestabstand, der zwischen dem optischen Farbsensor 11 und dem optischen Kontrastsensor 12 gemäß Figur 1 verwendet werden kann, um eine zeitlich korrekte Abfolge von Messung im Farbsensor 11, Auswertung in der Steuereinheit 20 und Aktivierung des Kontrastsensors 12 zu erzielen, und der im Zusammenhang gesehen werden kann mit der Zykluszeit der Steuereinheit 20 und deren Prozessor.

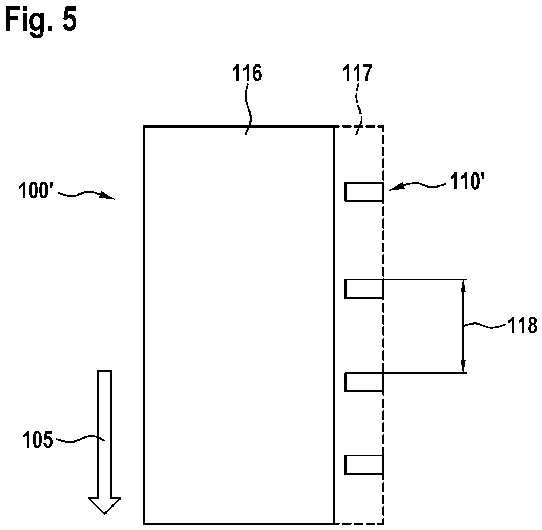

Figur 5 zeigt in schematischer Draufsicht eine bei einer herkömmlichen Materialbahn 100' verwendete herkömmliche Druckmarke 110' in Schwarz-Weiß-Form. Diese herkömmliche Druckmarke 110'ist entweder außerhalb des Druckbildes 116 angeordnet, um einwandfrei detektiert werden zu können, oder aber innerhalb eines Druckbildes 117, wenn die gesamte Materialbahn 100' bedruckt wird, wobei dann zur einwandfreien Detektion der Druckmarke 110' eine manuelle Definition eines Positionsfensters notwendig ist. Bei der Ausführungsform gemäß Figur 5 befinden sich die Druckmarken 110' in einem konstanten Abstand 118 zueinander.

Diese und weitere Merkmale und Eigenschaften der vorliegenden Erfindung werden an Hand der folgenden Darlegungen weiter erläutert:
Die vorliegende Erfindung betrifft insbesondere die automatische und druckbildunabhängige Druckmarkensteuerung für den Folienabzug einer Schlauchbeutelmaschine

Druckmarkensteuerungen erfassen die Position einer Folie am Ende eines Abzugs und führen gegebenenfalls eine Korrektur aus. Die Korrektur kompensiert den Schlupf zwischen Folie und den Abzugsbändern sowie die Differenz zwischen der eingestellten Abzugslänge und der aktuellen Druckbildlänge der Folie. Ein optischer Kontrastsensor erfasst über eine Druckmarke die aktuelle Position der Folie.

Bei einer bedruckten Folie mit zahlreichen Kontrasten soll der Sensor die Druckmarke eindeutig erkennen. Es gibt zwei Vorgehensweisen in der Praxis:
(i) Entweder liegt die Druckmarke 110 auf der Folie auf einem nichtbedruckten Bereich positioniert vor; dies ist bei ganzflächig kontrastreich bedruckten Folien nicht möglich.
(ii) Bei ganzflächig bedruckter Folie muss die Druckmarkenerfassung während des Vorziehens im Wechsel aktiviert und deaktiviert werden. Ein zuvor manuell definiertes Positionsfenster 120 zum erfassen der Druckmarke 110 aktiviert den Kontrastsensor und blendet die Kontraste im Druckbild zwischen den definierten Positionsfenstern aus.

Jede Störung im Folienabzug führt aber zu einem erneuten manuellen Einrichten des Positionsfensters. Die Stabilität des Prozesses ist abhängig von einer Vielzahl an Faktoren, von welchen einige kaum zu definierende Parameter Besitzen, z.B. im Hinblick auf Verschleiß-, Luftfeuchtigkeit-, Packstoff etc. Dazu kommt die Korrelation der Parameter untereinander.

Es ist ein Ziel der Erfindung, ein automatisches und eindeutiges, d.h. prozessstabiles, Erkennen der Druckmarke 110 unabhängig von der Farbgebung und Bedruckung der Folie als Materialbahn 100 zu ermöglichen.

Ein Farbsensor 11 erkennt eine als mehrfarbig definierte eindeutige Druckmarke 110 und setzt anschließend ein Positionsfenster 120 für den zweiten nachfolgenden Kontrastsensor 12. Dieser erfasst mit einer großen Genauigkeit die Position 115 dieser mehrfarbigen Druckmarke 110. Diese wird für die Berechnung der Korrektur verwendet, z.B. im Hinblick auf Lage und Orientierung in x- und y-Richtung und/oder in Bezug auf einen Bearbeitungsschritt.

Befindet sich die Druckmarke 110 z.B. nach einer Störung oder einem Folienwechsel außerhalb des Positionsfenster 120, löst die Steuerung 20 eine automatische Druckmarkensuche aus. Anschließend definiert das System das Positionsfenster 120 neu.

Dies ist bei komplexen Maschinen mit schwerzugänglichen Bereichen von Vorteil. Eine manuelle Fehlbedienung durch das Bedienpersonal wird ausgeschlossen. Dieser Prozess schließt die Einwirkungen variabler Parameter aus und gewährleistet einen stabilen Prozess.

Der Kunde kann den Druck der Folie in Bezug auf Farbgebung und Kontraste unabhängig zur Druckmarke 110 gestalten. Verwendet die Druckmarke 110 die Farben vom Druckbild, dann ist die Eindeutigkeit durch die definierte Farbfolge gewährleistet.

Ein mehrkanaliger Farbsensor 11 und ein Kontrastsensor 12 sind z.B. mit einer schnellen Digitaleingangskarte verbunden, dies kann separat oder Teil einer Steuereinheit 20 sein. Die Eingangskarte speichert die aktuelle ansteigende und abfallende Flanke eines Farb- oder Kontrastbereiches mit einem oder als einen Systemzeitstempel in Echtzeit ab.

Über die Systemzeitstempel interpoliert ein Prozessor, z.B. als Teil der Steuereinheit 20, die aktuelle Position des Farbbereiches bezogen auf die Bandabzüge.

Der dritte Farbbereichs 113 - z.B. in rot in den Beispielen - hat mit seinen Verlauf und/oder seiner Länge die Funktion eines Ruhebereiches und verhindert eine neue Flanke während der Auswertung. Die Steuerung benötigt für die Auswertung einen Zyklus mit einer Zykluszeit mit einem bestimmten Wert.

Die Farbbereiche und deren Abfolge werden mit einem hinterlegten Farbbereichsmuster in der Steuereinheit 20 verglichen. Bei einer Übereinstimmung im Toleranzbereich erfolgt die Freigabe für die anschließende Auswertung des Kontrastbereiches.

Der Kontrastsensor erfasst die ansteigende Flanke 112-1 des mittleren Farbbereiches 112 - hier in blau in den Beispielen - für die aktuelle Folienposition.

Die Farben sind so definiert, dass ein eindeutiger Kontrast vorhanden ist. Vorzugsweise werden die Farben des Druckbildes verwendet. Der erste Farbbereich 111 - hier in gelb in den Beispielen - oder letzte Farbbereich 113 - hier in rot in den Beispielen - können Teil der Hintergrundfarbe sein.

Bei Formaten mit farblich unterschiedlichen Druckmarken 110 ist ein Lernvorgang des Kontrastsensor 12 auf die jeweiligen Farben erforderlich. Das erfordert ein manuelles Eingreifen des Bedieners. Eine intelligente Kommunikation (IO-Link) zum Kontrastsensor 12 kann dies Problematik beheben. Es können für jedes Format jeweils die Parameter für die Farben übertragen werden. Ein Einrichten auf eine neue Druckmarke 110 ist nur einmal erforderlich. Beim Tausch des Sensors 11, 12 bleiben die Einstellwerte erhalten.

## Patentansprüche

1. Sensoranordnung zur optischen Erfassung einer Position (115) einer Farbdruckmarke (110) auf einer Materialbahn (100), insbesondere bei einer Verpackungsmaschine (1), mit:
- einem optischen Farbsensor (11) zur Groberfassung der Position (115) der Farbdruckmarke (110) auf der Materialbahn (100),
- einem optischen Kontrastsensor (12) zur Detailerfassung der Position (111) Farbdruckmarke (110) und
- einer Steuereinheit (20), welche eingerichtet ist, den Kontrastsensor (12) zur Detailerfassung der Position (115) der Farbdruckmarke (110) auf der Grundlage der Groberfassung der Position (115) der Farbdruckmarke (110) auf der Materialbahn (100) zu steuern.

2. Sensoranordnung nach Anspruch 1,
bei welcher im Verhältnis zu einer gegebenen Transportgeschwindigkeit der Materialbahn (100) in einer Transportrichtung (105) der optische Farbsensor (11) und der optische Kontrastsensor (12) in der Transportrichtung (105) der Materialbahn (100) von einander räumlich in einem Abstand (16) angeordnet sind, welcher einer Transportzeit der Materialbahn (100) entspricht, die innerhalb eine vorbestimmten Werteintervalls liegt und insbesondere eine bestimmte Zykluszeit der Steuereinheit (20) nicht unterschreitet.

3. Sensoranordnung nach einem der vorangehenden Ansprüche,
bei welcher die Steuereinheit (20) eingerichtet ist, vom optischen Farbsensor (11) und/oder vom optischen Kontrastsensor (12) ausgegebene Signale zu erfassen, zu speichern und/oder zu bewerten.

4. Sensoranordnung nach einem der vorangehenden Ansprüche,
bei welcher die Steuereinheit (20) eingerichtet ist, aus erfassten Signalen vom optischen Farbsensor (11) ein Vorliegen und/oder die Position einer vordefinierten mehrfarbigen Farbdruckmarke (110) auf der Materialbahn (100) und insbesondere Positionen von vordefinierten Farbwechseln innerhalb einer vorliegenden Farbdruckmarke (110) in der Transportrichtung (105) der Materialbahn (100) zu bestimmen.

5. Sensoranordnung nach einem der vorangehenden Ansprüche,
bei welcher die Steuereinheit (20) eingerichtet ist, (i) aus erfassten Signalen vom optischen Farbsensor (11) ein räumliches und/oder zeitliches Positionsfenster (120) in Bezug auf ein Vorliegen einer vordefinierten mehrfarbigen Farbdruckmarke (110) auf der Materialbahn (100) zu bestimmen und insbesondere (ii) den optischen Kontrastsensor (12) auf der Grundlage des Positionsfensters (120) zur Kontrasterfassung zu aktivieren und zu deaktivieren.

6. Sensoranordnung nach einem der vorangehenden Ansprüche,
bei welcher in der Steuereinheit (20) für mindestens eine vordefinierte mehrfarbige Farbdruckmarke (110) repräsentative Information niedergelegt ist, insbesondere für eine mehrfarbige Farbdruckmarke (110), die in einer Transportrichtung (105) der Materialbahn (100) eine vordefinierte Abfolge dreier Farben (111, 112, 113) aufweist, die paarweise verschieden sind und/oder eine Farbe gelb, eine Farbe blau und eine Farbe rot umfassen.

7. Sensoranordnung nach Anspruch 6,
bei welcher die Steuereinheit (20) ausgebildet ist, aus vom optischen Farbsensor (11) ausgegebenen erfassten Signalen die räumlichen und/oder zeitlichen Positionen des Beginns und des Endes der drei Farben (111, 112, 113) der Abfolge der Farben (111, 112, 113) der vordefinierten mehrfarbige Farbdruckmarke (110) (i) zu bestimmen, (ii) - insbesondere unmittelbar nach dem Vorliegen des Beginns einer dritten Farbe (113) - mit der niedergelegten repräsentativen Information zu vergleichen und (iii) bei Übereinstimmung mit dieser ein Positionsfenster (120) für den optischen Kontrastsensor (12) zu bestimmen.

8. Verpackungsmaschine zur Bearbeitung einer Materialbahn (100), mit:
- einer Sensoranordnung (10) nach einem der Ansprüche 1 bis 7 und
- mindestens einer Bearbeitungseinrichtung (30, 31, 32; 40), welche zur Bearbeitung der Materialbahn (100) auf der Grundlage einer Position (115) einer Farbdruckmarke (110) auf der Materialbahn (100) aus der Sensoranordnung (10) ausgebildet ist.

9. Verfahren zum Erfassen einer Position einer Farbdruckmarke (110) auf einer Materialbahn (100), insbesondere bei einer Verpackungsmaschine (1) und/oder unter Verwendung einer Sensoranordnung (10) nach einem der Ansprüche 1 bis 7,
mit Schritten:
(A) einer Groberfassung der Position (115) der Farbdruckmarke (110) auf der Materialbahn (100) auf der Grundlage der optischen Erfassung von Farbcharakteristika der Farbdruckmarke (110) auf der Materialbahn (100) und
(B) einer Detailerfassung der Position (115) der Farbdruckmarke (110) auf der Materialbahn (100) auf der Grundlage der optischen Erfassung von Kontrastcharakteristika der Farbdruckmarke (110) auf der Materialbahn (100),
wobei die Detailerfassung (B) der Position (115) der Farbdruckmarke (110) auf der Materialbahn (100) auf der Grundlage der Groberfassung (A) der Position (115) der Farbdruckmarke (110) auf der Materialbahn (100) gesteuert wird.

10. Verfahren nach Anspruch 9,
bei welchem, insbesondere für die Groberfassung (A), Farbcharakteristika der Farbdruckmarke (110) auf der Materialbahn (100) erfasst werden und daraus ein Vorliegen und/oder die Position eines Vorliegens einer vordefinierten mehrfarbigen Farbdruckmarke (110) auf der Materialbahn (100) und insbesondere Positionen von vordefinierten Farbwechseln innerhalb einer vorliegenden Farbdruckmarke (110) in einer Transportrichtung (105) der Materialbahn (100) bestimmt werden.

11. Verfahren nach Anspruch 9 oder 10,
bei welchem auf der Grundlage von Daten aus der Groberfassung (A) der Position (115) der Farbdruckmarke (110) auf der Materialbahn (100) ein räumliches und/oder zeitliches Positionsfenster (120) für die Detailerfassung (B) der Position (115) der Farbdruckmarke (110) auf der Materialbahn (100) bestimmt und der Detailerfassung (B) zu Grunde gelegt wird.

12. Verfahren nach einem der Ansprüche 9 bis 11,
bei welchem (i) aus erfassten Farbcharakteristika der Farbdruckmarke (110) auf der Materialbahn (100), insbesondere aus der Groberfassung (A), ein räumliches und/oder zeitliches Positionsfenster (120) in Bezug auf ein Vorliegen einer vordefinierten mehrfarbigen Farbdruckmarke (110) auf der Materialbahn (100) bestimmt wird und insbesondere (ii) das optische Erfassen von Kontrastcharakteristika der Farbdruckmarke (110) auf der Materialbahn (100) bei der Detailerfassung (B) auf der Grundlage des Positionsfensters (120) zur Kontrasterfassung aktiviert und deaktiviert wird.

13. Verfahren nach einem der Ansprüche 9 bis 12,
bei welchem für mindestens eine vordefinierte mehrfarbige Farbdruckmarke (110) repräsentative Information zu Grunde gelegt wird, insbesondere für eine mehrfarbige Farbdruckmarke (110), die in einer Transportrichtung (105) der Materialbahn (100) eine vordefinierte Abfolge dreier Farben (111, 112, 113) aufweist, die paarweise verschieden sind und/oder eine Farbe gelb, eine Farbe blau und eine Farbe rot umfassen.

14. Verfahren nach Anspruch 13,
bei welchem aus optisch erfassten Farbcharakteristika die räumlichen und/oder zeitlichen Positionen des Beginns und des Endes der drei Farben (111, 112, 113) der Abfolge der Farben (111, 112, 113) der vordefinierten mehrfarbige Farbdruckmarke (110) (i) bestimmt werden, (ii) - insbesondere unmittelbar nach dem Bestimmen des Vorliegens des Beginns einer dritten Farbe (113) - mit der niedergelegten repräsentativen Information verglichen wird und (iii) bei Übereinstimmung mit diesen ein Positionsfenster (120) für das optischen Erfassen von Kontrastcharakteristika bestimmt wird.

15. Verfahren zum Bearbeiten einer Materialbahn (100), insbesondere unter Verwendung einer Verpackungsmaschine (1) nach Anspruch 8,
- mit einem Schritt des Bearbeitens der Materialbahn (100), insbesondere des Transportierens und/oder des Ablängens der Materialbahn (100),
- bei welchem der Schritt des Bearbeitens der Materialbahn (100) gesteuert wird auf der Grundlage einer Position (115) einer oder mehrerer Farbdruckmarken (110) auf der Materialbahn (100) und
- bei welchem die Position (115) der einen oder der mehreren Farbdruckmarken (110) auf der Materialbahn (100) bestimmt wird mit einem Verfahren nach einem der Ansprüche 9 bis 14 und insbesondere unter Verwendung einer Sensoranordnung (10) nach einem der Ansprüche 1 bis 7.
